# EUROPEAN PATENT SPECIFICATION

(11) **EP 2 846 399 B1**
(45) Date of publication and mention of the grant of the patent: **25.05.2016**
(21) Application number: 14162144.1
(22) Date of filing: 27.03.2014
(51) Int. Cl.: G06K 7/10, H01Q 1/22, H01Q 7/00

(54) **Antenna module for terminal device and method for manufacturing the same**
Antennenmodul für eine Endgerätevorrichtung und Herstellungsverfahren dafür
Module d'antenne pour dispositif de terminal et procédé de fabrication de celui-ci

(30) Priority: 23.08.2013 US 201361869479 P; 26.03.2014 US 201414226782
(43) Date of publication of application: 11.03.2015
(73) Proprietor: Samsung SDI Co., Ltd., Giheung-gu Yongin-si, Gyeonggi-do 17084 (KR)
(72) Inventor: Hwang, Yu-Sik, Gyeonggi-do (KR)
(74) Representative: Taor, Simon Edward William

(56) References cited:
- US-A1- 2002 003 496
- US-A1- 2006 176 236
- US-A1- 2013 043 309

## Description

An aspect of the present invention relates to an antenna module for a terminal device and a method for manufacturing the same. More particularly, an aspect of the present invention relates to an antenna module for a terminal device and a method for manufacturing the same which can improve ferrite distribution as a factor having influence on a frequency bandwidth and adjust an LCR value in a pattern process.

Near field communication (NFC) is a non-contact communication technology using a frequency band of 13.56MHz as one of radio frequency identification (RFID) technologies. Portable terminal devices perform functions including information exchanges between the terminal devices, payments, searches, etc., using the NFC. Accordingly, demands on NFC antenna devices used in the short range communication scheme are continuously increased.

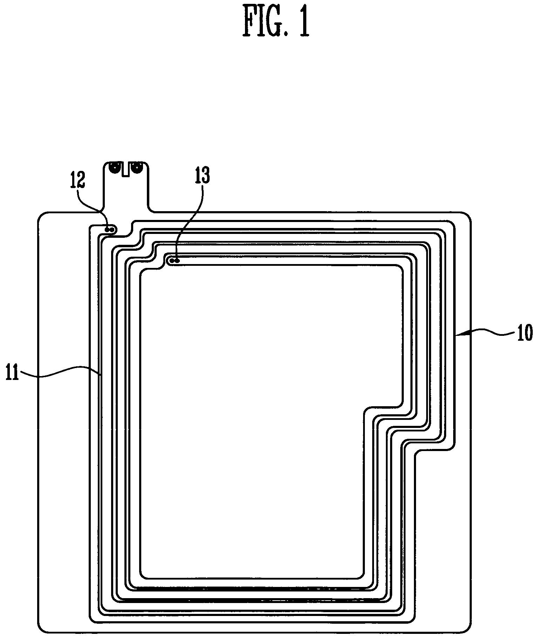

As shown in FIG. 1, an existing NFC radiation pattern 10 includes a loop pattern 11, and first and second power feeding terminals 12 and 13 electrically connected respectively to outer and inner ends of the loop pattern 11.

The radiation pattern 10 is stacked on a ferrite sheet (not shown) positioned therebeneath, and the ferrite sheet (not shown) blocks radio wave interference between the radiation pattern 10 and a printed circuit board (not shown) of a terminal device, thereby preventing degradation of antenna characteristics.

Generally, the ferrite sheet (not shown) is formed into a structure covering the entire surface of the radiation pattern 10.

Meanwhile, unlike the existing NFC frequency band, frequency specifications are ranged narrow in low-bandwidth communication. Hence, when considering ferrite distribution, etc., it is difficult to meet desired frequency specifications, using the existing NFC antenna pattern.

US 2002003496 A1 relates to an RF tag having an antenna that can be selectively tuned to achieve optimal performance.

Embodiments provide the design of a new antenna pattern which can improve ferrite distribution as a factor having influence on a frequency bandwidth and adjust an LCR value in a pattern process.

Other objects can be derived by those skilled in the art from the following embodiments.

According to an aspect of the present invention, there is provided an antenna module for a terminal device, including: a radiation pattern configured to include a loop pattern, wherein a plurality of guide patterns for forming one or more holes on the loop pattern are formed in the loop pattern, and wherein as one or more holes are formed in one or more among the plurality of guide patterns, the one or more holes are formed on the loop pattern.

The plurality of guide patterns may be formed in the innermost loop among one or more loops constituting the loop pattern.

First and second power feeding terminals may be respectively formed at outer and inner ends of the loop pattern, and the plurality of guide patterns may be disposed adjacent to the second power feeding terminal.

The loop pattern may have a quadrangular loop shape, and the plurality of guide patterns and the second power feeding terminal may be placed on one of four sides constituting the quadrangular loop shape.

The guide patterns may be consecutively arranged in a row at a predetermined interval, and concave patterns for distinguishing the guide patterns from one another may respectively exist between the guide patterns.

The height of the concave pattern may be lower than that of the guide pattern and the loop pattern.

The hole formed in each of the plurality of guide patterns may be greater than the width of the guide pattern and smaller than the width of the concave pattern.

The holes respectively formed in the plurality of guide patterns may have a size in which the holes are not overlapped with each other.

The antenna module may further include a sheet configured to block radio wave interference between a printed circuit board of the terminal device and the radiation pattern. The radiation pattern may be stacked on the sheet.

One or more holes may be formed on the loop pattern in a state in which the radiation pattern is stacked on the sheet.

The sheet may be a ferrite sheet.

According to another aspect of the present invention, there is provided a method for manufacturing an antenna module for a terminal device, the method including: stacking a radiation pattern including a loop pattern on a sheet; and forming at least one hole in one or more among a plurality of guide patterns so that the at least one hole is formed on the loop pattern.

In the forming of the at least one hole, the plurality of guide patterns may be punched one by one from the guide pattern close to an inner end of the loop pattern among the plurality of guide patterns.

In the forming of the at least one hole, the at least one hole may be formed so that the holes respectively formed in the plurality of guide patterns are not overlapped with each other.

The holes respectively formed in the plurality of guide patterns may have a size in which the holes are not overlapped with each other.

The plurality of guide patterns may be formed in the innermost loop among one or more loops constituting the loop pattern.

First and second power feeding terminals may be respectively formed at outer and inner ends of the loop pattern, and the plurality of guide patterns may be disposed adjacent to the second power feeding terminal.

The loop pattern may have a quadrangular loop shape, and the plurality of guide patterns and the second power feeding terminal may be placed on one of four sides constituting the quadrangular loop shape.

In the forming of the at least one hole, the plurality of guide patterns may be punched one by one from the guide pattern close to the second power feeding terminal among the plurality of guide patterns.

The guide patterns may be consecutively arranged in a row at a predetermined interval, and concave patterns for distinguishing the guide patterns from one another may respectively exist between the guide patterns.

The height of the concave pattern may be lower than that of the guide pattern and the loop pattern.

The hole formed in each of the plurality of guide patterns may be greater than the width of the guide pattern and smaller than the width of the concave pattern.

According to the present invention, it is possible to improve ferrite distribution as a factor having influence on a frequency bandwidth and to adjust an LCR value in a pattern process.

Further, it is possible to improve the yield of an antenna manufacturing process.

According to an aspect of the invention, there is provided an antenna module as set out in claim 1. Preferred features of invention are set out in claims 2 to 9.

According to an aspect of the invention, there is provided a terminal device as set out in claim 10.

According to an aspect of the invention, there is provided a method of manufacturing an antenna module for a terminal device as set out in claim 11. Preferred features of invention are set out in claims 12 to 15. In some embodiments, the terminal device may be a battery. In other embodiments, the terminal device may be an electronic device, for example an electronic device such as a mobile telephone.

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the example embodiments to those skilled in the art.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.
FIG. 1 is view showing an existing NFC antenna device.
FIG. 2 is a view schematically showing an antenna module for a terminal device according to an embodiment of the present invention.
FIG. 3 is a flowchart illustrating a method for manufacturing the antenna module for the terminal device according to the embodiment of the present invention.
FIG. 4 is an enlarged view showing a plurality of guide patterns according to the embodiment of the present invention.
FIG. 5 is a front view showing the antenna module for the terminal device according to the embodiment of the present invention.
FIG. 6 is a view schematically showing a state in which at least one hole is formed in one or more among the plurality of guide patterns according to the embodiment of the present invention.
FIG. 7 is a view showing a state in which at least one hole is formed in one or more among the plurality of guide patterns according to another embodiment of the present invention.

In the following detailed description, only certain exemplary embodiments of the present invention have been shown and described, simply by way of illustration. As those skilled in the art would realize, the described embodiments may be modified in various different ways, all without departing from the scope of the present invention. Accordingly, the drawings and description are to be regarded as illustrative in nature and not restrictive. In addition, when an element is referred to as being "on" another element, it can be directly on the other element or be indirectly on the another element with one or more intervening elements interposed therebetween. Also, when an element is referred to as being "connected to" another element, it can be directly connected to the other element or be indirectly connected to the other element with one or more intervening elements interposed therebetween. Hereinafter, like reference numerals refer to like elements.

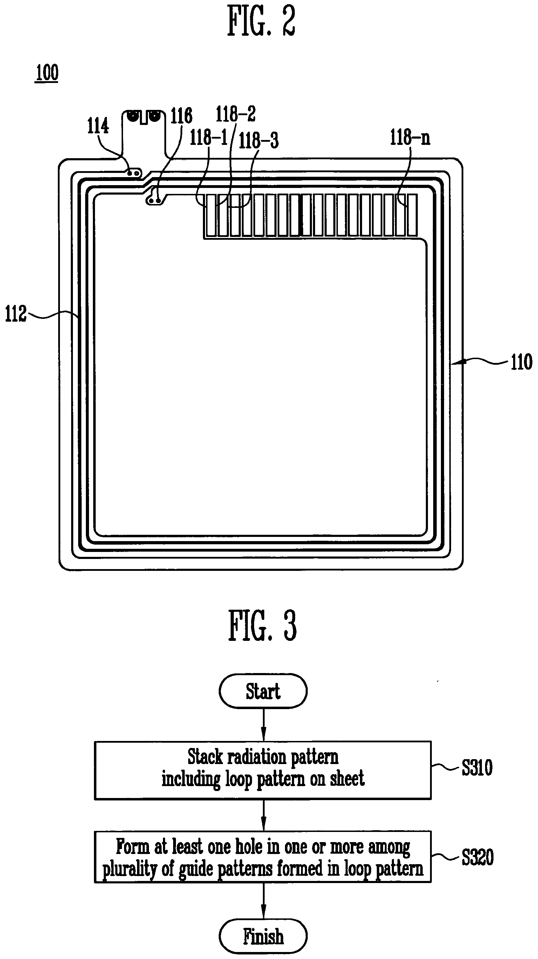

FIG. 2 is a view schematically showing an antenna module 100 for a terminal device according to an embodiment of the present invention.

FIG. 3 is a flowchart illustrating a method for manufacturing the antenna module for the terminal device according to the embodiment of the present invention.

As shown in FIGS. 2 and 3, the antenna module 100 for the terminal device includes a ferrite sheet (not shown) and a radiation pattern 110. The method for manufacturing the antenna module for the terminal device includes a step (S310) of stacking and a step (S320) of forming at least one hole.

More specifically, in step S310, the radiation pattern 110 including a loop pattern is stacked on the ferrite sheet (not shown).

In this case, the ferrite sheet (not shown) may perform a function of blocking radio wave interference between a printed circuit board of the terminal device and the radiation pattern 110 and amplifying a signal to extend the radius distance at which the signal can be received from an antenna.

In some embodiments the sheet performing the function is a ferrite sheet. However, embodiments of the present invention are not limited thereto.

In some embodiments, the antenna module 100 is an antenna module for near field communication (NFC). However, embodiments of the present invention are not limited thereto. That is, the antenna module 100 may be applied to other antennas in order to improve ferrite distribution and to adjust an LCR value in an antenna pattern process.

According to this embodiment, the radiation pattern 110 stacked on the ferrite sheet (not shown) includes a loop pattern 112, a first power feeding terminal 114 formed at an outer end of the loop pattern 112, and a second power feeding terminal 116 formed at an inner end of the loop pattern 112.

Accordingly, the loop pattern 112 is connected to the printed circuit board of the terminal device (not shown) through the first and second power feeding terminals 114 and 116.

The radiation pattern 110 performs the function of an antenna that resonates in an NFC frequency band. That is, the radiation pattern 110 is formed with a flexible printed circuit board (FPCB) to perform the function of an antenna that resonates in a frequency band of about 13.56MHz.

As described above, it is difficult to secure desired frequency specifications, using the existing NFC radiation pattern. Thus, in this embodiment, a plurality of guide patterns 118 for forming one or more holes are formed in the loop pattern 112.

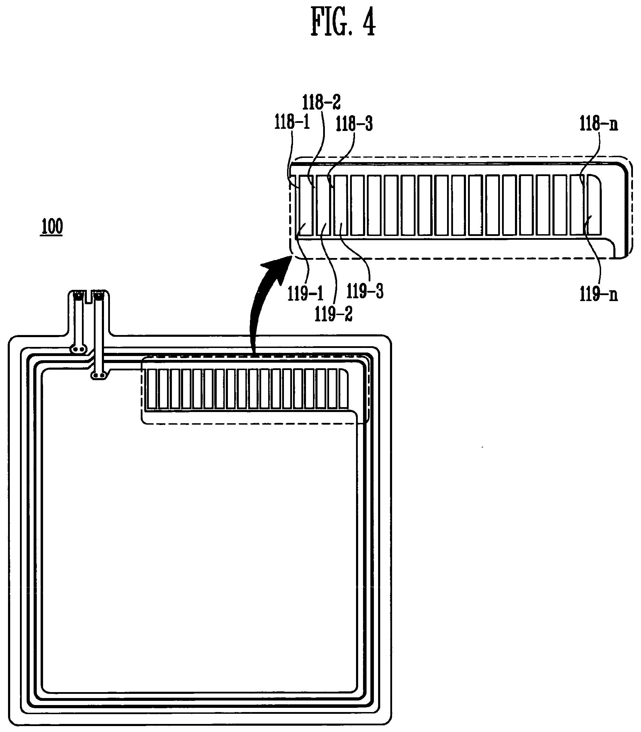

Hereinafter, the plurality of guide patterns 118 according to this embodiment will be described in detail with reference to FIGS. 2 and 4.

FIG. 4 is an enlarged view showing a plurality of guide patterns according to the embodiment of the present invention.

As shown in FIG. 4, the plurality of guide patterns 118 are formed in the loop pattern 112. The plurality of guide patterns 118 exist to form one or more holes on the loop pattern 112. That is, as at least one hole is formed in one or more among the plurality of guide patterns 118 in step S320 described later, one or more holes are formed on the loop pattern 112.

In this embodiment, the loop pattern 112 comprising at least one loop of conductive material, the loop pattern having a first end 114 and a second end 116. The loop pattern 112 further comprises a plurality of strips of conductive material 118-1,..., 118-n extending from a first region of a first loop. Each of the plurality of strips of conductive material 118-1,..., 118-n has a one end connected to the first loop. The other ends of each plurality of strips of conductive material 118-1,..., 118-n are connected together

In this embodiment, the plurality of guide patterns 118 are formed in the innermost loop among one or more loops constituting the loop pattern 112. The plurality of guide patterns 118 are disposed adjacent to the second power feeding terminal 116 of the first and second power feeding terminals 114 and 116.

That is, the plurality of guide patterns 118 may be disposed immediately adjacent to the second power feeding terminal 116 formed at the inner end of the loop pattern 112.

For example, the loop pattern 112 may have a quadrangular loop shape, and the plurality of guide patterns 118 and the second power feeding terminal 116 are positioned on one of four sides constituting the quadrangular loop shape.

N guide patterns 118-1, 118-2, 118-3, ..., 118-n constituting the plurality of guide patterns 118 according to this embodiment are consecutively arranged in a row at a predetermined interval. N concave patterns 119-1, 119-2, 119-3, ..., 119-n for distinguishing the n guide patterns from one another respectively exist between the n guide patterns. The concave patterns form separation regions between the N guide patterns 118-1,118-2,118-3, ..., 118-n.

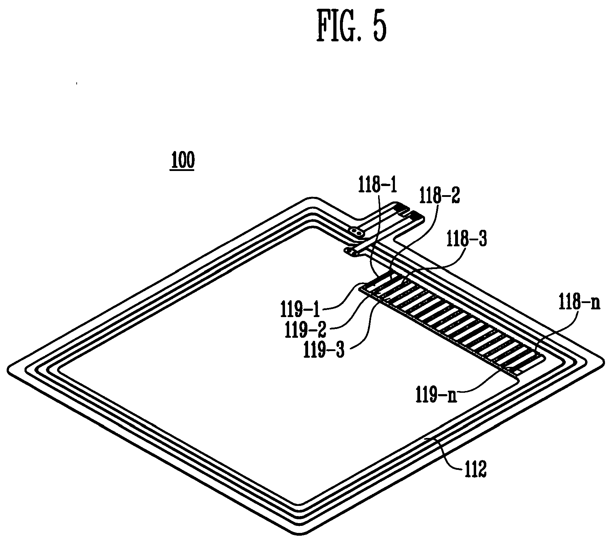

More specifically, FIG. 5 shows a front view of the antenna module 100 for the terminal device according to the embodiment of the present invention. As shown in FIG. 5, the n concave patterns 119-1, 119-2, 119-3, ..., 119-n respectively exist between the n guide patterns 118-1, 118-2, 118-3, ..., 118-n. Although the number n in this embodiment is 18, embodiments of the present invention are not limited thereto.

In this case, the height of the concave pattern 119 is preferably lower than that of the guide pattern 118 and the loop pattern 112, in consideration of the distinguishment of the guide patterns through the concave pattern, the flow of current in the radiation pattern and the fine adjustment of a frequency caused by forming the hole in the guide pattern, the height.

Accordingly, it is possible to improve ferrite distribution as a factor having influence on a frequency bandwidth and to adjust an LCR value in a pattern process.

Hereinafter, a configuration in which the frequency is finely adjusted by forming at least one hole in the guide pattern 118 and controlling inductance and capacitance will be described with reference to FIGS. 3, 6 and 7.

In this embodiment, the plurality of strips of conductive material 118-1,..., 118-n are arranged to extend in a same direction, which in this embodiment is an inward direction. In other embodiments, the plurality of strips of conductive material may extend in another direction. For example, the innermost loop may be offset from the other loops, and the plurality of strips of conductive material may extend in an outward direction.

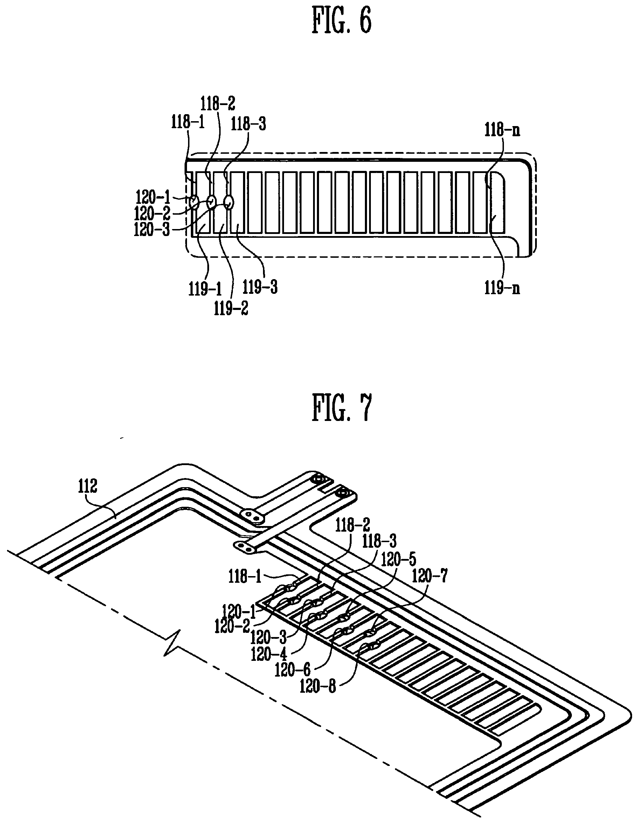

FIG. 6 is a view schematically showing a state in which one or more holes 120-1, 120-2 and 120-3 are formed in one or more among the plurality of guide patterns 118-1, 118-2, 118-3, ...,118-n in step S320 according to the embodiment of the present invention.

As shown in FIG. 6, in step S320, one or more holes are formed in one or more among the plurality of guide patterns 118 formed in the loop pattern 112 in order to form the one or more holes on the loop pattern 112.

In this case, it is possible to measure a frequency specification whenever one hole is formed in each of the plurality of guide patterns 118, and the holes are formed in the plurality of guide patterns 118 until a desired frequency specification is derived.

FIG. 7 is a view showing a state in which at least one hole is formed in one or more among the plurality of guide patterns according to another embodiment of the present invention.

As one hole is formed in each of the plurality of guide patterns, the inductance decreases, and the capacitance increases. Thus, the fine adjustment of the frequency is possible.

The process of forming holes in the plurality of guide patterns 118 will be described in detail. In a case where the ferrite distribution is not satisfactory in the antenna pattern process, the frequency specifications are reduced by punching the plurality of guide patterns 118 one by one from the guide pattern close to the inner end of the loop pattern 112 among the n guide patterns 118-1, 118-2, 118-3, ..., 118-n, i.e., the guide pattern 118-1 close to the second power feeding terminal 116.

In this case, the holes respectively formed in the plurality of guide patterns are preferably formed not to overlap with each other.

To this end, in step S320, the holes have a size in which the holes respectively formed in the plurality of guide patterns are formed not to overlap with each other as shown in FIG. 6. For example, the hole may be formed with a size which is greater than the width of the guide pattern 118-1 and smaller than the width of the concave pattern 119-1.

As shown in FIG. 7, when the guide patterns 118 are punched one by one from the guide pattern 118-1 close to the second power feeding terminal 116, the punching is performed in a zigzag, so that the holes respectively formed in the plurality of guide patterns can be formed not to overlap with each other.

Meanwhile, the radiation pattern 110 is stacked on the ferrite sheet (not shown). Thus, as the holes are formed in one or more among the plurality of guide patterns 118, the holes are formed at corresponding positions in the ferrite sheet (not shown).

That is, the holes may be formed through a punching process. The holes may be holes passing through the radiation pattern 110 and the ferrite sheet (not shown). Hence, the or each hole (120-1,..., 120-n) may be arranged to extend through the sheet.

Although it has been described in the present invention that, for convenience of illustration, the stacked structure of the antenna module is configured with only the ferrite sheet (not shown) and the radiation pattern 110, an adhesive tape may be formed on and beneath the ferrite sheet. The radiation pattern (i.e., the FPCB) may be stacked on the adhesive tape, and a photo solder resist (PSR) ink may be applied on the radiation pattern 110.

Accordingly, the holes may be holes passing through all the ferrite sheet, the adhesive tape formed on and beneath the ferrite sheet, the radiation pattern and the PSR ink.

As described above, according to the present invention, it is possible to improve ferrite distribution as a factor having influence on a frequency bandwidth and to adjust an LCR value in a pattern process. Further, it is possible to improve the yield of an antenna manufacturing process.

As discussed, embodiments of the invention provide an antenna module for a terminal device comprising: a loop pattern comprising at least one loop of conductive material, the loop pattern having a first end and a second end; wherein the loop pattern further comprises a plurality of strips of conductive material extending from a first region of a first loop, each of the plurality of strips of conductive material having a first end connected to the first loop and a second end, wherein the second ends of the each plurality of strips of conductive material are connected together.

Embodiments of the invention can also provide a terminal device including an antenna module according to any of the above mentioned embodiments. The terminal device can be any electronic device, such as a mobile telephone. In some embodiments, the antenna module may be attached to a battery.

Embodiments of the invention also provide a method of manufacturing an antenna module for a terminal device, the method comprising: forming a loop pattern comprising at least one loop of conductive material, the loop pattern having a first end and a second end; wherein the loop pattern further comprises a plurality of strips of conductive material extending from a first region of a first loop, each of the plurality of strips of conductive material having a first end connected to the first loop and a second end, wherein the second ends of the each plurality of strips of conductive material are connected together.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An antenna module for a terminal device comprising:
a loop pattern (112) comprising at least one loop of conductive material, the loop pattern having a first end (114) and a second end (116);
wherein the loop pattern (112) further comprises a plurality of strips of conductive material (118-1,..., 118-n) extending from a first region of a first loop, each of the plurality of strips of conductive material (118-1,..., 118-n) having a first end connected to the first loop and a second end, wherein the second ends of the each plurality of strips of conductive material (118-1,..., 118-n) are connected together,
the antenna module being **characterized in that** at least one of the strips of conductive material (118-1,..., 118-n) has a hole (120-1,..., 120-n) therein.

2. The antenna module according to claim 1, wherein the first loop is an innermost loop.

3. The antenna module according to claim 1 or 2, wherein holes (120-1,..., 120-n) formed in adjacent strips of conductive material (118-1,..., 118-n) are offset from each other.

4. The antenna module according to any preceding claim, wherein the plurality of strips of conductive material (118-1,..., 118-n) are arranged to extend in a same direction;
optionally wherein the plurality of strips of conductive material (118-1,..., 118-n) are arranged to extend in an inward direction.

5. The antenna module according to any preceding claim, wherein the or each loop has a generally quadrilateral shape, wherein the plurality of strips of conductive material (118-1,..., 118-n) are arranged to extend from a same side of the first loop;
optionally wherein the plurality of strips of conductive material (118-1,..., 118-n) are arranged to extend in a direction perpendicular to the first region of the first loop.

6. The antenna module according to any preceding claim, wherein the first end and the second end of the loop pattern (112) are arranged at a same side of the antenna module.

7. The antenna module according to any preceding claim, wherein adjacent strips of conductive material (118-1,..., 118-n) are separated by separation regions (119-1,..., 119-n).

8. The antenna module according to any preceding claim, further comprising a sheet configured to block radio wave interference from the terminal device to the loop pattern (112), wherein the loop pattern (112) is formed on the sheet;
optionally wherein the sheet is a ferrite sheet.

9. The antenna module according to claim 8, wherein the or each hole (120-1,..., 120-n) is arranged to extend through the sheet.

10. A terminal device comprising an antenna module according to any one of claims 1 to 9.

11. A method of manufacturing an antenna module for a terminal device, the method comprising:
forming a loop pattern (112) comprising at least one loop of conductive material, the loop pattern (112) having a first end (114) and a second end (116),
wherein the loop pattern (112) further comprises a plurality of strips of conductive material (118-1,..., 118-n) extending from a first region of a first loop, each of the plurality of strips of conductive material (118-1,..., 118-n) having a first end connected to the first loop and a second end, wherein the second ends of the each plurality of strips of conductive material (118-1,..., 118-n) are connected together;
the method being **characterized by** forming a hole (120-1,..., 120-n) in at least one of the strips of conductive material (118-1,..., 118-n).

12. The method according to claim 11, wherein the first loop is an innermost loop.

13. The method according to claim 11 or 12, wherein the number of the strips of conductive material (118-1,..., 118-n) comprising a hole (120-1,..., 120-n) is arranged to tune the frequency specifications of the antenna module;
optionally wherein holes (120-1,..., 120-n) formed in adjacent strips of conductive material (118-1,..., 118-n) are offset from each other.

14. The method according to any one of claims 11 to 13, further comprising forming the loop pattern (112) on a sheet configured to block radio wave interference from the terminal device to the loop pattern (112);
optionally wherein the sheet is a ferrite sheet.

15. The method according to claim 14, wherein the or each hole (120-1,..., 120-n) is arranged to extend through the sheet.

## Patentansprüche

1. Antennenmodul für eine Endgerätevorrichtung, umfassend:
ein Schleifenmuster (112), das zumindest eine Schleife aus leitfähigem Material umfasst, wobei das Schleifenmuster ein erstes Ende (114) und ein zweites Ende (116) aufweist;
wobei das Schleifenmuster (112) ferner eine Mehrzahl von Streifen aus leitfähigem Material (118-1, ..., 118-n) umfasst, die sich von einem ersten Bereich einer ersten Schleife erstrecken, wobei jeder der Mehrzahl von Streifen aus leitfähigem Material (118-1, ..., 118-n) ein mit der ersten Schleife verbundenes erstes Ende und ein zweites Ende aufweist, wobei die zweiten Enden jedes der Mehrzahl von Streifen aus leitfähigem Material (118-1, ..., 118-n) miteinander verbunden sind,
wobei das Antennenmodul **dadurch gekennzeichnet ist, dass** zumindest einer der Streifen aus leitfähigem Material (118-1, ..., 118-n) ein Loch (120-1, ..., 120-n) darin aufweist.

2. Antennenmodul nach Anspruch 1, wobei die erste Schleife eine innerste Schleife ist.

3. Antennenmodul nach Anspruch 1 oder 2, wobei in benachbarten Streifen aus leitfähigem Material (118-1, ..., 118-n) ausgebildete Löcher zueinander versetzt sind.

4. Antennenmodul nach einem der vorangehenden Ansprüche, wobei die Streifen der Mehrzahl von Streifen aus leitfähigem Material (118-1, ..., 118-n) angeordnet sind, um sich in einer selben Richtung zu erstrecken;
wobei optional die Streifen der Mehrzahl von Streifen aus leitfähigem Material (118-1, ..., 118-n) angeordnet sind, um sich nach innen zu erstrecken.

5. Antennenmodul nach einem der vorangehenden Ansprüche, wobei die bzw. jede Schleife eine im Allgemeinen vierseitige Form aufweist, wobei die Streifen der Mehrzahl von Streifen aus leitfähigem Material (118-1, ..., 118-n) angeordnet sind, um sich von einer selben Seite der ersten Schleife zu erstrecken;
wobei die Streifen der Mehrzahl von Streifen aus leitfähigem Material (118-1, ..., 118-n) optional angeordnet sind, um sich in einer zum ersten Bereich der ersten Schleife senkrechten Richtung zu erstrecken.

6. Antennenmodul nach einem der vorangehenden Ansprüche, wobei das erste Ende und das zweite Ende des Schleifenmusters (112) auf einer selben Seite des Antennenmoduls angeordnet sind.

7. Antennenmodul nach einem der vorangehenden Ansprüche, wobei benachbarte Streifen aus leitfähigem Material (118-1, ..., 118-n) durch Trennbereiche (119-1, ..., 119-n) getrennt sind.

8. Antennenmodul nach einem der vorangehenden Ansprüche, ferner umfassend eine Lage, die gestaltet ist, Funkwelleninterferenz von der Endgerätevorrichtung zum Schleifenmuster (112) zu blockieren, wobei das Schleifenmuster (112) auf der Lage ausgebildet ist;
wobei die Lage optional eine Ferritlage ist.

9. Antennenmodul nach Anspruch 8, wobei das bzw. jedes Loch (120-1, ..., 120-n) angeordnet ist, um sich durch die Lage zu erstrecken.

10. Endgerätevorrichtung, umfassend ein Antennenmodul nach einem der Ansprüche 1 bis 9.

11. Verfahren zur Herstellung eines Antennenmoduls für eine Endgerätevorrichtung, umfassend:
Ausbilden eines Schleifenmusters (112), das zumindest eine Schleife aus leitfähigem Material umfasst, wobei das Schleifenmuster (112) ein erstes Ende (114) und ein zweites Ende (116) aufweist,
wobei das Schleifenmuster (112) ferner eine Mehrzahl von Streifen aus leitfähigem Material (118-1, ..., 118-n) umfasst, die sich von einem ersten Bereich einer ersten Schleife erstrecken, wobei jeder der Mehrzahl von Streifen aus leitfähigem Material (118-1, ..., 118-n) ein mit der ersten Schleife verbundenes erstes Ende und ein zweites Ende aufweist, wobei die zweiten Enden jedes der Mehrzahl von Streifen aus leitfähigem Material (118-1, ..., 118-n) miteinander verbunden sind,
wobei das Verfahren durch das Ausbilden eines Lochs (120-1, ..., 120-n) in zumindest einem der Streifen aus leitfähigem Material (118-1, ..., 118-n) gekennzeichnet ist.

12. Verfahren nach Anspruch 11, wobei die erste Schleife eine innerste Schleife ist.

13. Verfahren nach Anspruch 11 oder 12, wobei die Menge der ein Loch (120-1, ..., 120-n) umfassenden Streifen aus leitfähigem Material (118-1, ..., 118-n) angeordnet ist, um die Frequenzvorgaben des Antennenmodul abzustimmen;
wobei in benachbarten Streifen aus leitfähigem Material (118-1, ..., 118-n) ausgebildete Löcher (120-1, ..., 120-n) optional zueinander versetzt sind.

14. Verfahren nach einem der Ansprüche 11 bis 13, ferner umfassend das Ausbilden des Schleifenmusters (112) auf einer Lage, die gestaltet ist, Funkwelleninterferenz von der Endgerätevorrichtung zum Schleifenmuster (112) zu blockieren;
wobei die Lage optional eine Ferritlage ist.

15. Verfahren nach Anspruch 14, wobei das bzw. jedes Loch (120-1, ..., 120-n) angeordnet ist, um sich durch die Lage zu erstrecken.

## Revendications

1. Module d'antenne pour un dispositif terminal comprenant :
un motif de boucle (112) comprenant au moins une boucle de matériau conducteur, le motif de boucle comportant une première extrémité (114) et une deuxième extrémité (116) ;
dans lequel le motif de boucle (112) comprend en outre une pluralité de bandes de matériau conducteur (118-1, ..., 118-n) s'étendant d'une première région d'une première boucle, chacune de la pluralité de bandes de matériau conducteur (118-1, ..., 118-n) comportant une première extrémité connectée à la première boucle et une deuxième extrémité, les deuxièmes extrémités de chacune de la pluralité de bandes de matériau conducteur (118-1, ..., 118-n) étant connectées les unes aux autres,
le module d'antenne étant **caractérisé en ce qu'**au moins l'une des bandes de matériau conducteur (118-1, ..., 118-n) comporte un trou (120-1, ..., 120-n) dans celle-ci.

2. Module d'antenne selon la revendication 1, dans lequel la première boucle est une boucle la plus à l'intérieur.

3. Module d'antenne selon la revendication 1 ou 2, dans lequel les trous (120-1, ..., 120-n) formés dans les bandes adjacentes de matériau conducteur (118-1, ..., 118-n) sont décalés les uns des autres.

4. Module d'antenne selon l'une quelconque des revendications précédentes, dans lequel la pluralité de bandes de matériau conducteur (118-1, ..., 118-n) sont agencées de manière à s'étendre dans une même direction ;
facultativement, dans lequel la pluralité de bandes de matériau conducteur (118-1, ..., 118-n) sont agencées de manière à s'étendre dans une direction vers l'intérieur.

5. Module d'antenne selon l'une quelconque des revendications précédentes, dans lequel la ou chaque boucle a une forme généralement quadrilatérale, dans lequel la pluralité de bandes de matériau conducteur (118-1, ..., 118-n) sont agencées de manière à s'étendre à partir d'un même côté de la première boucle ;
facultativement, dans lequel la pluralité de bandes de matériau conducteur (118-1, ..., 118-n) sont agencées de manière à s'étendre dans une direction perpendiculaire à la première région de la première boucle.

6. Module d'antenne selon l'une quelconque des revendications précédentes, dans lequel la première extrémité et la deuxième extrémité du motif de boucle (112) sont agencées d'un même côté du module d'antenne.

7. Module d'antenne selon l'une quelconque des revendications précédentes, dans lequel les bandes adjacentes de matériau conducteur (118-1, ..., 118-n) sont séparées par des régions de séparation (119-1, ..., 119-n).

8. Module d'antenne selon l'une quelconque des revendications précédentes, comprenant en outre une feuille configurée pour bloquer l'interférence d'onde radio du dispositif terminal vers le motif de boucle (112), le motif de boucle (112) étant formé sur la feuille ;
facultativement, dans lequel la feuille est une feuille de ferrite.

9. Module d'antenne selon la revendication 8, dans lequel le ou chaque trou (120-1, ..., 120-n) est agencé de manière à s'étendre à travers la feuille.

10. Dispositif terminal comprenant un module d'antenne selon l'une quelconque des revendications 1 à 9.

11. Procédé de fabrication d'un module d'antenne pour un dispositif terminal, le procédé comprenant :
la formation d'un motif de boucle (112) comprenant au moins une boucle de matériau conducteur, le motif de boucle (112) comportant une première extrémité (114) et une deuxième extrémité (116),
dans lequel le motif de boucle (112) comprend en outre une pluralité de bandes de matériau conducteur (118-1, ..., 118-n) s'étendant d'une première région d'une première boucle, chacune de la pluralité de bandes de matériau conducteur (118-1, ..., 118-n) comportant une première extrémité connectée à la première boucle et une deuxième extrémité, les deuxièmes extrémités de chacune de la pluralité de bandes de matériau conducteur (118-1, ..., 118-n) étant connectées les unes aux autres ;
le procédé étant **caractérisé par** la formation d'un trou (120-1, ..., 120-n) dans au moins l'une des bandes de matériau conducteur (118-1, ..., 118-n).

12. Procédé selon la revendication 11, dans lequel la première boucle est une boucle la plus à l'intérieur.

13. Procédé selon la revendication 11 ou 12, dans lequel le nombre de bandes de matériau conducteur (118-1, ..., 118-n) comprenant un trou (120-1, ..., 120-n) est agencé pour accorder les spécifications de fréquence du module d'antenne ;
facultativement, dans lequel les trous (120-1, ..., 120-n) formés dans les bandes adjacentes de matériau conducteur (118-1, ..., 118-n) sont décalés les uns des autres.

14. Procédé selon l'une quelconque des revendications 11 à 13, comprenant en outre la formation du motif de boucle (112) sur une feuille configurée pour bloquer l'interférence d'onde radio du dispositif terminal vers le motif de boucle (112) ;
facultativement, dans lequel la feuille est une feuille de ferrite.

15. Procédé selon la revendication 14, dans lequel le ou chaque trou (120-1, ..., 120-n) est agencé de manière à s'étendre à travers la feuille.
